# EUROPEAN PATENT APPLICATION

(11) **EP 0 563 469 A1**
(43) Date of publication of application: **06.10.1993**
(21) Application number: 92302836.9
(22) Date of filing: 31.03.1992
(51) Int. Cl.: F16L 37/30

(54) **A connector valve**

(71) Applicant: Mars G.B. Limited, Slough Berkshire SL1 4LG (GB)
(72) Inventor: Ford, Andrew Michael, c/o Thomas's Division, Batley, West Yorkshire WF17 9LU (GB); Lower, Timothy Miles, Wokingham, Berkshire RG11 1JT (GB)
(74) Representative: Colgan, Stephen James

(57) **Abstract**

A connector valve comprising a male portion 1 and a female portion 3, moveable between an engaged position in which the valve is open and a separated position in which the valve is closed, the male and female portions 1, 3 each including a body 5, 105 having an aperture 9, 109 therethrough and a sealing member 7, 107 moveable relative thereto, the apertures 9, 109 being aligned when the valve is open and sealed by the sealing members 7, 107 when the valve is closed, wherein the relative positions of the apertures 9, 109 and sealing members 7, 107 change automatically as the male and female portions 1, 3 move from the engaged position to the separated position. This arrangement provides a very neat and compact device for making or breaking a pipe joint while simultaneously opening or sealing the pipe ends. Further, when using such a connector valve, very little fluid is spilt as the two pipe ends are joined or separated.

## Description

This invention relates to valves, and in particular to a novel form of connector which forms seals on either side of the connection when the connection is broken. The invention is particularly suitable for use in relation to an aquarium filtering device.

Many forms of valve/connector are known, but in general they require the valve control and connection/disconnection to be undertaken separately. With regard to aquarium filtering devices, wherein it is necessary to disconnect the device from the aquarium tank for servicing, it is only known to use simple taps to prevent water escaping from the filtering device or from the pipework when disconnected. In such cases, the taps must first be closed before the pipe or pipes are disconnected from the filtering device.

Since the taps cannot be placed immediately adjacent to each other, there will always be a portion of the pipe between the two taps which retains water not sealed within the pipes when the connection is broken. Hence water always leaks from the pipes after disconnection. This is clearly undesirable.

The present invention has been devised to overcome this problem with regard to aquarium filtering devices, but it is also applicable to many other applications. Further, the present invention enables two fluid conduits to be sealed at the same time as a connection between the two conduits is broken. This arrangement is a clear advance over the known prior art.

According to the present invention there is provided a connector valve comprising a male portion and a female portion, moveable between an engaged position in which the valve is open and a separated position in which the valve is closed, the male and female portions each including a body having an aperture therethrough and a disc-like sealing member having an aperture moveable relative thereto, the body apertures being aligned with the sealing member apertures when the valve is open and sealed by the sealing members when the valve is closed, wherein the relative positions of the body apertures and the sealing member apertures change automatically from alignment to non-alignment as the male and female portions move from the engaged position to the separated position.

Due to this invention, a very neat and compact connector may be provided which enables two conduits to be sealed at positions which are very close to each other, thus resulting in a very small spillage (if any) of fluid when the connection is broken.

Preferably the sealing members engage each other when the valve is open and move in unison until the male and female portions become separated.

Preferably one of the sealing members includes a collar around its aperture, which engages the aperture in the other sealing member, to ensure that the two sealing members move in unison until the male and female portions separate when the valve is closed.

Preferably the bodies are each free to move only a predetermined distance relative to their respective sealing members. These predetermined distances may be defined by studs mounted on the bodies running in tracks formed in the sealing members. Other means for defining the maximum relative movement of the bodies and sealing members can of course be envisaged.

Each sealing member may include a face seal, which contacts its respective body, to produce a fluid-tight seal when the valve is closed. Alternatively, of course, seals may be provided around the apertures in the bodies of the male and female portions contacting the sealing members, thus likewise resulting in a fluid-tight seal when the valve is closed.

Preferably the male and female portions are each substantially circular and the two bodies rotate relative to each other in opposite directions to open or close the valve.

The two bodies may engage by means of a bayonet fit. This bayonet fit preferably only allows disengagement of the male and female portions when the valve is closed.

In one embodiment of the invention, each body includes a retaining ring which holds its respective sealing member in contact with the body. Alternatively, the sealing member may be held in contact with the body by means of a snap fit between the two components.

Preferably at least one body includes means for attachment to a fluid conduit. Preferably this attachment means is a neck surrounding the aperture in the body and extending away from the sealing member.

Although it is envisaged that the connector valve according to the present invention is likely to have only one aperture in each body if it is used in conjunction with an aquarium filtering device, it will of course be appreciated that the bodies may each include two or more apertures which are aligned when the valve is open and which are sealed by the sealing members when the valve is closed.

A specific embodiment of the present invention is now described, by way of example only, with reference to the accompanying drawings, in which:-
Figure 1 is a plan view of a connector valve which is open, but in which the male and female portions of the valve have been separated for clarity;
Figure 2 is a sectional side elevation in the direction A-A of Figure 1;
Figure 3 is a plan view similar to Figure 1, but in which the connector valve is partially closed; and
Figure 4 is a view similar to Figures 1 and 3, but in which the connector valve is fully closed, thus allowing the male and female portions to be separated.

With reference to the drawings, a connector valve according to the present invention comprises a male portion 1 and a female portion 3. The male portion 1 includes a generally circular body 5 and a disc-like sealing member 7. A hole 9 passes through the body portion 5 and is surrounded by a neck 11 extending away from the sealing member 7. This neck 11 is provided with rubber O-ring seals 13 which enable a fluid-tight fit to be achieved with a fluid conduit (not shown).

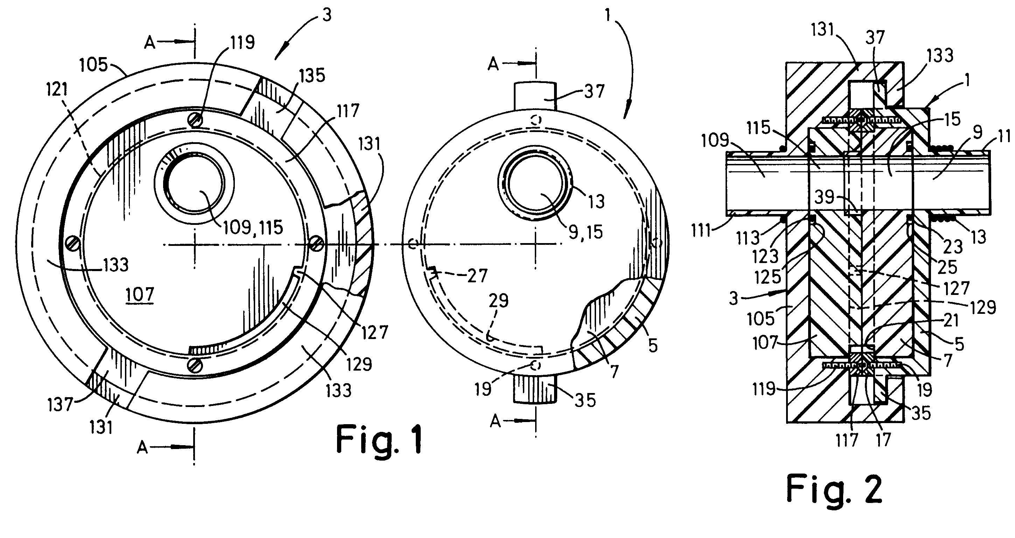

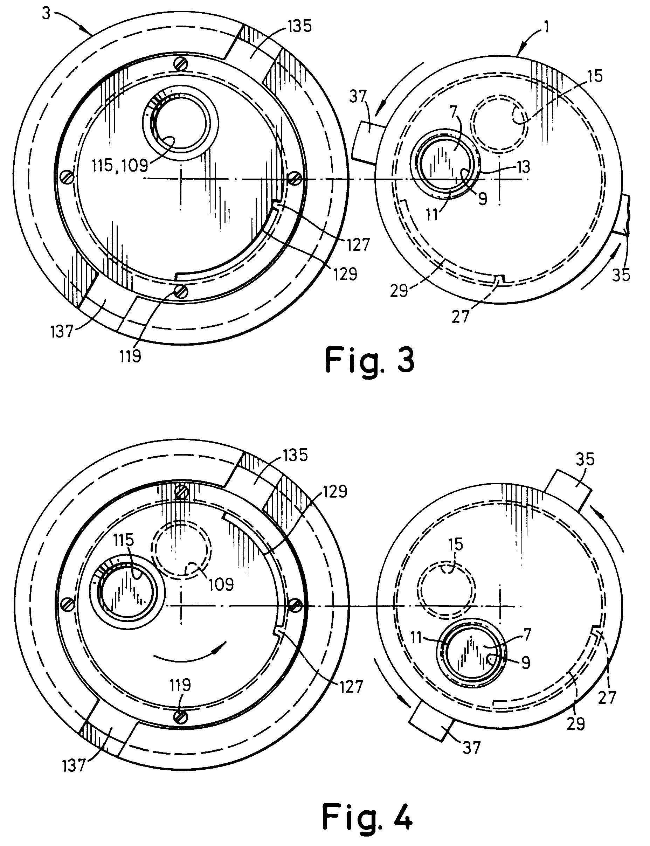

The sealing member 7 includes an aperture 15 which, when the valve is open (as shown in Figures 1 and 2), is aligned with the hole 9 in the body 5. A metal retaining ring 17 is attached to the body 5 by means of screws 19 and bears against a shoulder 21 formed on the sealing member 7. A face seal 23 is situated in a circular recess 25 around the aperture 15 in the sealing member 7. This face seal 23 provides a water-tight seal between the body 5 and the sealing member 7. The retaining ring 17 includes a stud 27 which travels in a track 29 of predetermined length in the sealing member 7. Hence, as will be appreciated, the sealing member 7 is able to rotate within the body 5 between the position shown in Figures 1 and 2 to the position shown in Figures 3 and 4, this relative motion being defined by the length of the track 29.

Similarly to the male portion 1, the female portion 3 comprises a body 105 and a sealing member 107. The body 105 includes a hole 109 and a neck 111 surrounding the hole 109 and extending away from the sealing member 107. The neck 111 includes a rubber seal 113 for forming a fluid-tight seal with a pipe (not shown) mounted on the neck 111.

In an alternative embodiment, the body 105 of the female portion 3 is formed integrally with the casing of an aquarium filtering device. In such an arrangement, the neck 111 is not necessary, since the hole 109 communicates directly with the internal workings of the filtering device.

The sealing member 107 includes an aperture 115 which is coaxial with the hole 109 when the valve is open. The sealing member 107 is held adjacent the body 105 by a retaining ring 117. The retaining ring 117 is fixed to the body 105 by means of screws 119 and engages a shoulder 121 around the periphery of the sealing member 107.

An O-ring seal 123 fits in a recess 125 in the sealing member 107 surrounding the aperture 115. This seal 123 forms a water-tight seal between the body 105 and the sealing member 107.

The retaining ring 117 includes a stud 127 which engages a track 129 in the sealing member 107. The stud 127 and track 129 dictate how far the sealing member 107 is able to rotate within the body 105.

The body 105 of the female portion 3 includes side walls 131 and inwardly extending end walls 133. The end walls 133 include two openings 135, 137 at diametrically opposed positions. The body 5 of the male portion 1 includes two diametrically opposed flanges 35, 37 which enable the male portion 1 to engage the female portion 3 by means of a bayonet fit via openings 135, 137. In this regard, the flange 35 passes through opening 135 and the flange 37 passes through opening 137.

As shown in Figures 1 and 2, the valve is open when the holes 9, 109 and the apertures 15, 115 are all aligned.

When the connector valve is to be disconnected, so that the male 1 and female 3 portions are separated and the holes 9, 109 are closed by the sealing members 7, 107, the male portion 1 is rotated anticlockwise (as viewed in Figure 1) relative to the female portion 3. Hence, if the body 105 of the female portion 3 is held stationary and the body 5 of the male portion 1 is rotated anticlockwise (c.f. the arrow in Figure 3), the hole 9 moves out of alignment with the apertures 15, 115 and the hole 109 in the female portion 3. As the body 5 rotates, the stud 27 moves in the track 29 from one end to the other. The resulting intermediate position of the body 5 is shown in Figure 3.

As the body 5 of the male portion 1 is rotated further anticlockwise, the stud 27 bears against the end of the track 29 to rotate the sealing member 7 with the body 5. A collar 39, surrounding the aperture 15 in the sealing member 7, extends into the aperture 115 in the sealing member 107, thus causing the sealing member 107 to rotate in unison with the sealing member 7 of the male portion 1. The rotation of the male portion 1 and sealing member 107 is dictated by the motion of the stud 127 in the track 129. In this regard, as the positions of the various parts move from those shown in Figure 3 to those shown in Figure 4, the track 129 moves relative to the stud 127 so that the stud ends up being at the other end of the track 129 (as shown in Figure 4).

When the valve is closed, as shown in Figure 4, the aperture 115 is no longer coaxial with the hole 109, but the flanges 35, 37 are now in line with the openings 135, 137. Thus, the male and female portions 1, 3 can be separated.

Although the two portions 1, 3 may be separated, the holes 9, 109 are sealed by the sealing members 7, 107. This sealing is achieved because the O-ring seals 23, 123 prevents the flow of water from the holes 9, 109 to the apertures 15, 115. The O-ring seals 23, 123 could, of course, alternatively be mounted in recesses in the bodies 5, 105 around the holes 9, 109.

When the connector valve is to be re-connected and the valve opened, the aforementioned procedure is simply reversed. In this regard, the male portion 1 is inserted into the female portion 3 such that the collar 39, surrounding the aperture 15, engages the aperture 115 as the flanges 35, 37 pass through the openings 135, 137. The body 5 of the male portion 1 is then rotated clockwise until the studs 27, 127 revert back to their initial positions in the tracks 29, 129, thus resulting in the holes 9, 109 and apertures 15, 115 being re-aligned. The valve is then once again open with the male and female portions 1, 3 held together by virtue of the bayonet fit.

It will of course be understood that the present invention has been described above purely by way of example, and that modifications in detail can be made within the scope of the invention.

## Claims

1. A connector valve comprising a male portion and a female portion, moveable between an engaged position in which the valve is open and a separated position in which the valve is closed, the male and female portions each including a body having an aperture therethrough and a disc-like sealing member having an aperture moveable relative thereto, the body apertures being aligned with the sealing member apertures when the valve is open and sealed by the sealing members when the valve is closed, wherein the relative positions of the body apertures and the sealing member apertures change automatically from alignment to non-alignment as the male and female portions move from the engaged position to the separated position.

2. A valve as claimed in claim 1, wherein the sealing members engage each other when the valve is open and move in unison until the male and female portions become separated.

3. A valve as claimed in claim 2, wherein one of the sealing members includes a collar around its aperture which engages the aperture in the other sealing member, to ensure that the two sealing members move in unison until the male and female portions separate.

4. A valve as claimed in any preceding claim, wherein the bodies are each free to move only a predetermined distance relative to their respective sealing members.

5. A valve as claimed in claim 4, wherein the predetermined distances are defined by studs mounted on the bodies running in tracks formed in the sealing members.

6. A valve as claimed in any preceding claim, wherein the sealing members include face seals which contact the bodies to produce fluid-tight seals when the valve is closed.

7. A valve as claimed in any preceding claim, wherein the male and female portions are each substantially circular and the two bodies rotate relative to each other in opposite directions to open or close the valve.

8. A valve as claimed in any preceding claim, wherein the two bodies engage by means of a bayonet fit.

9. A valve as claimed in any preceding claim, wherein each body includes a retaining ring which holds its respective sealing member in contact with the body.

10. A valve as claimed in any preceding claim, wherein at least one body includes means for attachment to a pipe.

11. A valve as claimed in claim 10, wherein the attachment means is a neck surrounding the aperture and extending away from the sealing member.

12. A valve as claimed in any preceding claim, wherein the bodies each include two or more apertures which are aligned when the valve is open and which are sealed by the sealing members when the valve is closed.

13. An aquarium filtering device including a connector valve as claimed in any preceding claim.
